# EUROPEAN PATENT APPLICATION

(11) **EP 4 474 858 A1**
(43) Date of publication of application: **11.12.2024**
(21) Application number: 24179772.9
(22) Date of filing: 04.06.2024
(51) Int. Cl.: G01S 7/48, G01S 7/481, G01S 7/484, G01S 7/486, G01S 7/4911, G01S 7/4912, G01S 17/10, G01S 17/48, G01S 17/86, G01S 17/89, G01S 17/931, G01C 11/30, G06T 7/10, G06T 7/593, G01S 17/58

(54) **DETECTION APPARATUS**

(30) Priority: 07.06.2023 JP 2023093936
(71) Applicant: CANON KABUSHIKI KAISHA, Tokyo 146-8501 (JP)
(72) Inventor: FUNAKOSHI, Shuto, Tokyo 146-8501 (JP)
(74) Representative: TBK

(57) **Abstract**

A detection apparatus (100) includes a first distance measuring unit that includes a light source configured to emit light having irradiation intensity changeable for each of a plurality of detection areas (104, 105), the first distance measuring unit configured to emit the light to the detection area and to acquire first distance information to the detection area using reflected light from the detection area, a second distance measuring unit configured to acquire second distance information (102, 103) to the detection area using image information, and a determining unit configured to determine the irradiation intensity based on the second distance information.

## Description

### BACKGROUND

### Technical Field

One of the aspects of the embodiments relates to a detection apparatus that improves distance measuring accuracy by determining a light emission parameter of a light emitting element based on information on a target.

### Description of Related Art

Light Detection and Ranging (LiDAR) is known as a technology that measures a distance to a target by detecting reflected light from the target irradiated with laser light. Japanese Patent Laid-Open No. 2022-141781 discloses a configuration that improves distance measuring accuracy for a distant target without increasing the laser intensity of an entire system by making the laser intensity in an area where a distance could not be measured in a previous frame higher than that in an area where a distance could be measured.

However, the configuration disclosed in Japanese Patent Laid-Open No. 2022-141781 may increase the laser intensity in an area such as the sky where no distance measurement can be performed. In this case, in a case where the laser intensity of the entire system is maintained constant, the laser intensity in areas other than the area where the distance measurement cannot be performed reduces and the distance measuring accuracy and the measurable distance may reduce.

### SUMMARY

The present invention in its first aspect provides a detection apparatus as specified in claims 1 to 5.

The present invention in its second aspect provides a detection apparatus as specified in claims 6 to 16.

Further features of various embodiments of the disclosure will become apparent from the following description of embodiments with reference to the attached drawings.

### BRIEF DESCRIPTION OF THE DRAWINGS

FIG. 1 is a block diagram illustrating the configuration of a detection apparatus according to a first embodiment.
FIG. 2 is a schematic diagram illustrating an example arrangement of pixel units on an image sensor according to the first embodiment.
FIG. 3 is a schematic diagram illustrating the structure of a pixel unit on the image sensor according to the first embodiment.
FIG. 4 is a schematic diagram illustrating a light emitter according to the first embodiment.
FIG. 5 is a flowchart illustrating processing according to the first embodiment.
FIG. 6 is a conceptual view illustrating an example of an image signal according to the first embodiment.
FIG. 7 is a conceptual view illustrating an example of a distance map according to the first embodiment.
FIG. 8 is a conceptual view illustrating the irradiation intensity of laser light according to the first embodiment.
FIG. 9 is a conceptual view illustrating the detection apparatus according to the first embodiment mounted on an automobile.
FIG. 10 is a block diagram illustrating the configuration of a detection apparatus according to a second embodiment.
FIG. 11 is a conceptual view illustrating an example of an image that has received area determination according to the second embodiment.
FIG. 12 is a conceptual view illustrating an example irradiation intensity of laser light according to the second embodiment.
FIG. 13 is a conceptual view illustrating an example irradiation intensity of laser light according to the second embodiment.
FIG. 14 is a conceptual view illustrating an example irradiation intensity of laser light according to the second embodiment.
FIG. 15 is a conceptual view illustrating an example irradiation intensity of laser light according to the second embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments according to the disclosure. Corresponding elements in respective figures will be designated by the same reference numerals, and a duplicate description thereof will be omitted.

### FIRST EMBODIMENT

This embodiment will describe an example that determines the irradiation intensity of a light emitter for each of a plurality of irradiation areas (detection areas) using distance information based on a parallax image signal from an image sensor (imaging unit).

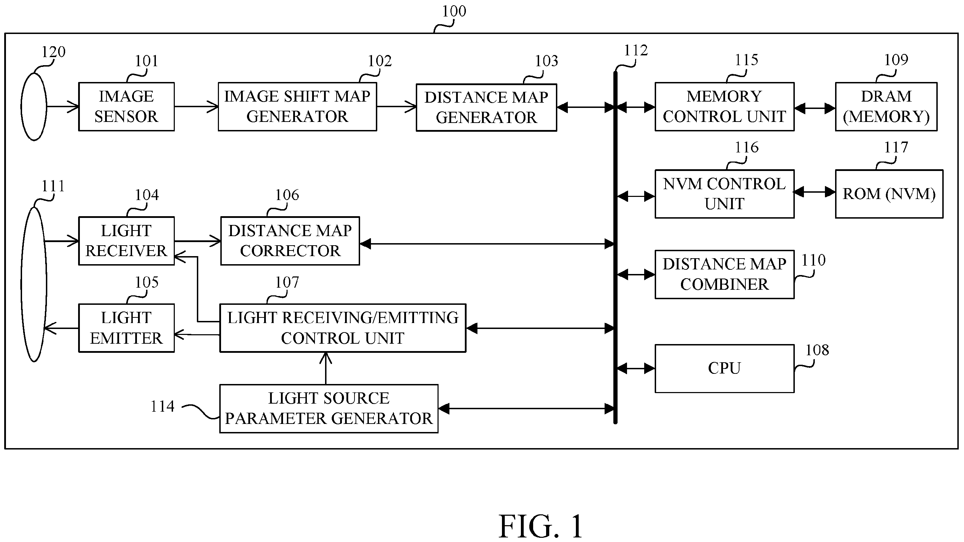

FIG. 1 is a block diagram illustrating the configuration of a detection apparatus (distance measuring apparatus) 100 according to this embodiment.

A light emitter 105 and a light receiver 104 function as a first distance measuring unit configured to detect a distance to a target (detection area or object) using the Time of Flight (TOF) method. The light emitter 105 emits light from two-dimensionally arranged light emitting elements according to a light emission timing and a light source parameter which are sent from a light receiving/emitting control unit 107. The light receiver 104 measures distance data in accordance with the light emission timing which is sent from the light receiving/emitting control unit 107. An optical system 111 includes a half-mirror or reflection suppressing structure configured to transmit part of light and reflect part of the light. The light emitted from the light emitter 105 passes through the optical system 111, is irradiated onto the target, is reflected by the target, passes through the optical system 111, and enters the light receiver 104. A light source parameter generator ((intensity) determining unit) 114 determines the irradiation intensity of the light emitter 105, etc. and generates a light source parameter for the light emitter 105 to emit predetermined light. The light receiving/emitting control unit 107 outputs the light source parameter and the light emission timing to the light receiver 104 and the light emitter 105. A distance map corrector 106 performs various corrections, such as an error correction and an optical correction, for distance data output from the light receiver 104.

A CPU 108 includes a microcomputer or the like configured to control the entire detection apparatus 100, give operational instructions to each functional block, and execute various control processing. The CPU 108 also performs calculations necessary for the various control processing. The CPU 108 controls a memory control unit 115 and a nonvolatile memory (NVM) control unit 116, etc. via a bus 112. A program required to start the CPU 108 is previously recorded in a nonvolatile memory (NVM) 117. Programs required after the startup are also recorded in the nonvolatile memory 117.

A memory 109 stores data, such as a DRAM, and has a storage capacity configured to store intermediate image data in image processing, constants, and programs for the operation of the CPU 108. The memory control unit 115 writes data to and reads data from the memory 109 in response to instructions from the CPU 108.

The nonvolatile memory control unit 116 writes data into and reads data out of the nonvolatile memory 117 in response to instructions from the CPU 108. The nonvolatile memory 117 is an electrically erasable and recordable memory and stores constants and programs for the operation of the CPU 108.

The bus 112 mainly transmits a control signal from the CPU 108 and the like to each block and transfers data such as a distance map.

An optical system 120 includes a plurality of lens units which include a focus lens, and an aperture stop, and forms a target image on an image sensor 101.

The image sensor 101 includes a plurality of photoelectric conversion elements, such as a CCD or a CMOS, photoelectrically converts a target image into an electrical signal, and outputs the electrical signal as an image signal. The photoelectric conversion element is configured to capture and receive light beams having different incident directions. The image sensor 101 can output a parallax image signal for each light beam having a different incident direction, and also can collectively output, as a single image signal, image signals received by the plurality of photoelectric conversion elements and converted into electrical signals.

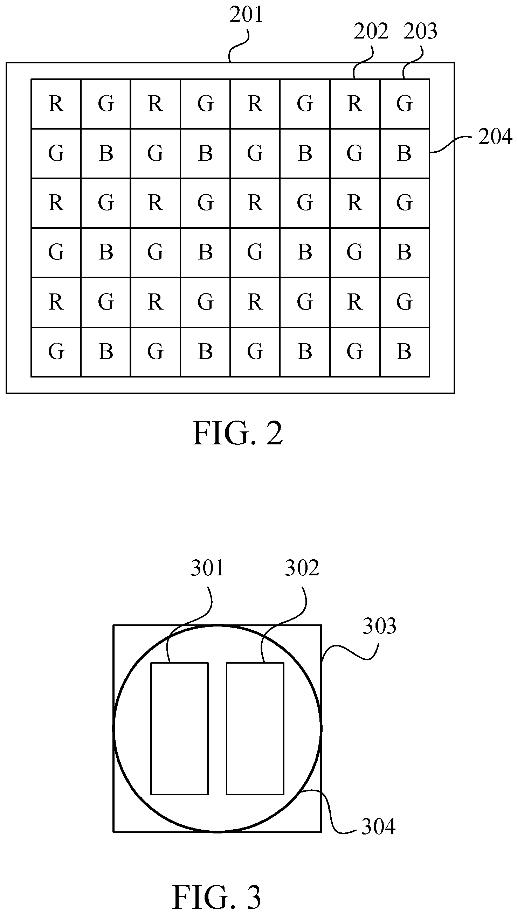

FIG. 2 is a schematic diagram illustrating an example arrangement of pixel units on the image sensor 101. In a light receiver 201, the photoelectric conversion elements represented by photodiodes are two-dimensionally arranged, and a color filter is provided above each of the photoelectric conversion elements to transmit a specific wavelength band of the light beam from the target. Filters 202, 203, and 204 are color filters which transmit red light, green light, and blue light, respectively, and are regularly arranged. The light beams which have passed through the filters 202, 203, and 204 are photoelectrically converted by photoelectric converters each placed directly below each filter, and are output from the image sensor 101 as an electrical signal.

FIG. 3 is a schematic diagram illustrating the structure of a pixel unit 303 of the image sensor 101. The pixel unit 303 includes two photoelectric converters 301 and 302 and one microlens 304. The filter is formed above the microlens 304 one to one with respect to the pixel unit 303. This structure can acquire an image signal by receiving light beams having different incident directions by individually extracting signals from the paired photoelectric converters. Simultaneously extracting signals from the paired photoelectric converters can acquire an image signal for displaying or recording by an image processing apparatus or an image pickup apparatus.

The other pixel units on the image sensor 101 are also configured in the illustrated positional relationship and are repeatedly arranged in the horizontal and vertical directions on the image sensor 101.

This embodiment provides a single microlens in common to the two photoelectric converters, but a structure is not limited to the above structure as long as a phase difference can be detected. As long as part of pixel units can detect a phase difference, not all pixel units need to be able to detect the phase difference.

An image shift map generator 102 generates an image shift map from a parallax image signal obtained by the image sensor 101. A distance map generator 103 generates a distance map from the image shift map generated by the image shift map generator 102. In this embodiment, the image sensor 101, the image shift map generator 102, and the distance map generator 103 function as a second distance measuring unit. A distance map combiner (combiner) 110 combines two distance maps which are output from the distance map generator 103 and the distance map corrector 106, respectively, into a single distance map.

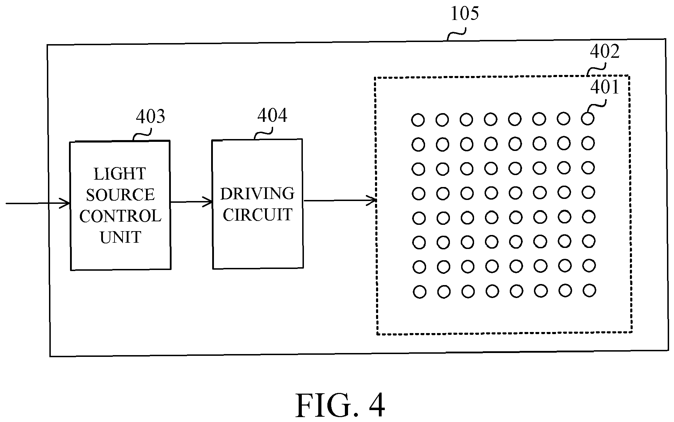

FIG. 4 is a schematic diagram illustrating the light emitter 105. The light emitter 105 includes a light source unit 402, a light source control unit 403, and a driving circuit 404.

The light source unit 402 includes a plurality of light emitting elements 401 arranged in a two-dimensional array on a substrate. The light emitting element 401 is a Vertical Cavity Surface Emitting Laser (VCSEL). The light source unit 402 can adjust the irradiation intensity of light for each area.

In FIG. 4, eight light emitting elements 401 are arranged in the horizontal direction and eight light emitting elements 401 are arranged in the vertical direction, but the number of arranged light emitting elements 401 can be arbitrarily set.

Although the light emitting element 401 is a VCSEL in this embodiment, this embodiment is not limited to this example. However, the light emitting element 401 may be one that can be integrated into a one-dimensional or two-dimensional array, and may be, for example, an edge-face emitting laser or a light-emitting diode (LED). In a case where an edge-face emitting laser is used as the light emitting element 401, laser bars arranged one-dimensionally on a substrate or a laser bar stack formed by stacking these laser bars to form a two-dimensional light emitting element array can be used. In a case where an LED is used as the light emitting element 401, LEDs arranged in a two-dimensional array on a substrate can be used.

In order to suppress the influence of environmental light, the wavelength of light emitted by the light emitting element 401 may be in a near-infrared band, but this embodiment is not limited to this example.

The light source control unit 403 controls the driving circuit 404 in accordance with the light emission timing and light source parameter sent from the light receiving/emitting control unit 107. The driving circuit 404 drives the light source unit 402 and can switch the irradiation intensity of the laser light for each of the plurality of irradiation areas.

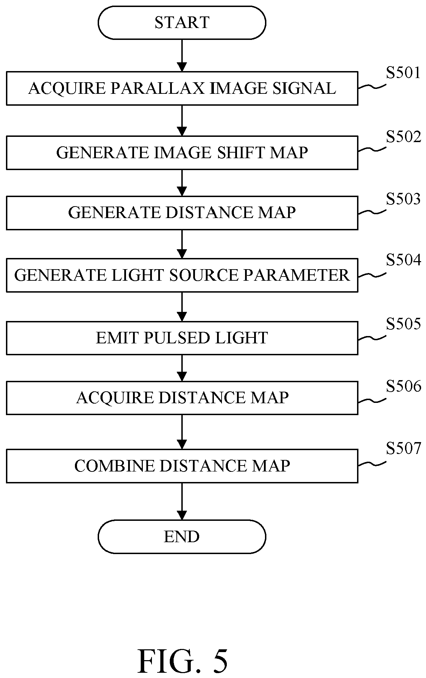

Referring now to FIG. 5, a description will be given of a process flow according to this embodiment. FIG. 5 is a flowchart illustrating processing according to this embodiment.

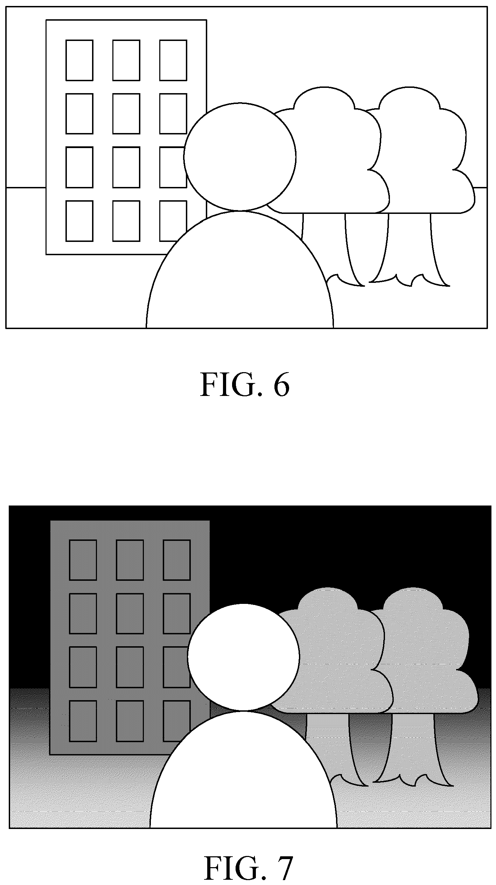

In step S501, the image shift map generator 102 acquires a parallax image signal in a visible region from the image sensor 101. In this step, an electrical signal converted by each photoelectric converter included in the pixel unit illustrated in FIG. 3 is output as the parallax image signal. FIG. 6 is an conceptual view illustrating an example image signal obtained from the image sensor 101.

In step S502, the image shift map generator 102 first performs correlation calculation processing such as a Sum of Absolute Difference (SAD) calculation between the parallax images using the parallax image signal acquired in step S501. Next, the image shift map generator 102 calculates an image shift amount between the two parallax images based on the correlation degree, and generates an image shift map as a two-dimensional map of the image shift amount. The image shift amount may be calculated on the granularity of one pixel constituting the parallax image, or may be calculated for each area by defining the area as the predetermined number of pixels.

In step S503, the distance map generator 103 generates a distance map from the image shift map generated in the step S502. A conversion parameter for converting the image shift map into the distance map is stored in the memory 109, and the distance map generator 103 reads the conversion parameter from the memory 109 to generate the distance map. FIG. 7 is a conceptual view illustrating an example of the distance map. FIG. 7 illustrates that the lighter the shading is, the shorter the distance from the detection apparatus to the target is, and the darker the shading is, the farther the distance from the detection apparatus to the target.

In step S504, the light source parameter generator 114 first determines the irradiation intensity of the laser light for each of the plurality of irradiation areas of the light emitter 105 using the distance map generated in step S503. Next, the light source parameter generator 114 generates a light source parameter for the light emitter 105 to emit the light with the determined irradiation intensity.

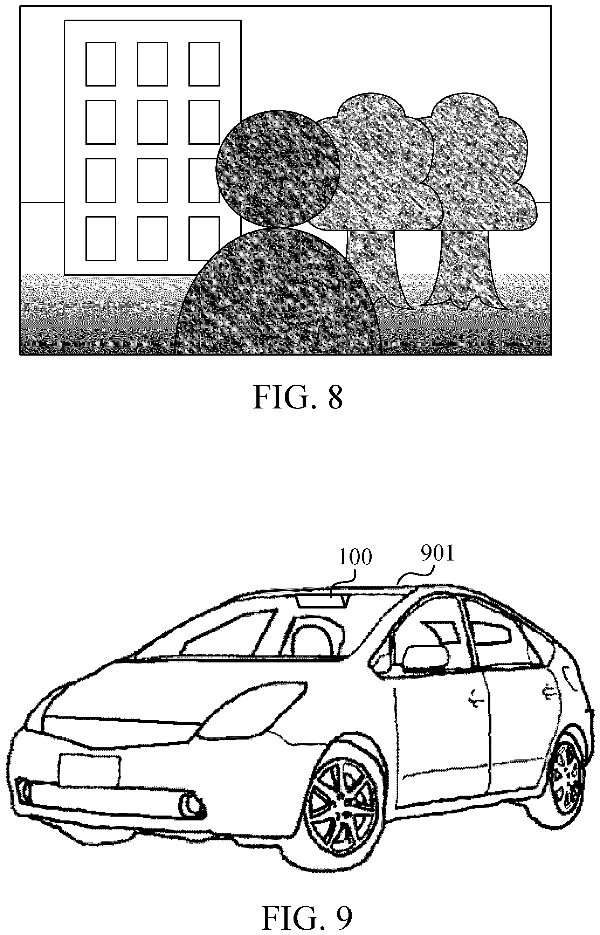

In this embodiment, the light source parameter generator 114 determines the irradiation intensity such that the irradiation intensity is low in an area where the distance to the target is short, and the irradiation intensity is high in an area where the distance to the target is long. FIG. 8 is a conceptual view illustrating the irradiation intensity of the laser light for each of the plurality of irradiation areas. FIG. 8 illustrates that the lighter the shading is, the higher the irradiation intensity is, and the darker the shading is, the lower the irradiation intensity is.

The intensity of light including the laser light attenuates as the flight distance increases. Since the light receiver 104 receives not only reflected light from the target but also environmental light, if the intensity of the reflected light from the target which the light receiver 104 receives is low, the distance measuring accuracy decreases due to the noise influence such as the environmental light. Thus, the distance measurement for the target located at a short distance has relatively high accuracy, and the distance measurement for the target located at a long distance has relatively low accuracy or is impossible. The distance measuring accuracy also depends on the irradiation intensity of the laser light, and as the irradiation intensity becomes higher, the distance measuring accuracy and the measurable distance improve. This embodiment can improve the distance measuring accuracy and the measurable distance for a target located at a long distance by increasing the irradiation intensity of the laser light emitted to the target located at a long distance. On the other hand, this embodiment reduces the irradiation intensity of the laser light emitted to a target located at a short distance and having relatively high distance measuring accuracy. Thereby, this embodiment can reduce the power consumption required for the light receiver 104 and the light emitter 105 and improve the measurable distance.

In step S505, the light emitter 105 emits pulsed light in accordance with the light source parameter generated in step S504. The driving circuit 404 drives the light source unit 402 and adjusts each irradiation area to have the predetermined irradiation intensity.

In step S506, the light receiver 104 detects a distance to the target using the TOF method and acquires a distance map. The TOF method measures the distance to the target based on the time from the light emission timing in step S505 to the timing of the reflected light reception from the target.

More specifically, the light receiving/emitting control unit 107 outputs the light emission timing to the light emitter 105 and the light receiver 104. The light emitted from the light emitter 105 passes through the optical system 111 and is irradiated onto the target. Part of the light irradiated onto the target is reflected, passes through the optical system 111, and enters the light receiver 104. The light receiver 104 measures distance data based on a difference between the timing at which the reflected light is detected and the light emission timing notified from the light receiving/emitting control unit 107. The light receiver 104 acquires the distance data measured for each light receiving element as the distance map.

In step S507, the distance map combiner 110 combines the distance map generated from the image shift map in step S503 and the distance map acquired using the TOF method in step S506, and outputs a single distance map.

In FIG. 8, in an area where the irradiation intensity of the laser light is reduced, the distance measuring accuracy may lower or the distance cannot be measured. As for the area where the irradiation intensity of the laser light is reduced, combining the distance map generated from the image shift map in step S503 instead of the distance map acquired in step S506 can suppress a decrease in the distance measuring accuracy caused by reduced the irradiation intensity of the laser light.

In detecting the distance to the target using a parallax image, the distance measuring accuracy and the measurable distance depend on the magnitude of the parallax in the parallax image. In a case where the distance map is generated by using the parallax image output from the image sensor 101, the distance measuring accuracy for a distant target is low, and the measurable distance is relatively short. On the other hand, in the TOF method, the measurable distance is relatively long.

Accordingly, this embodiment combines the distance map generated from the image shift map in step S503 with an area in which the irradiation intensity of the laser light is reduced among areas of the distance map generated in step S506. This configuration can reduce the power consumption of the light receiver 104 and the light emitter 105 and improve the distance measuring accuracy over the entire field of view.

In FIG. 8, the light emitter 105 may not irradiate the target at a measurable distance with the laser light in the parallax image. In this case, the power consumption of the light receiver 104 and the light emitter 105 can be further reduced. The distance map generated in step S503 may be combined with the area that has not been irradiated with the laser light.

A description will be given of an example in which the detection apparatus 100 according to this embodiment is used in an electronic apparatus. FIG. 9 is a conceptual view illustrating the detection apparatus 100 mounted on an automobile 901. In FIG. 9, the detection apparatus 100 is installed at a front portion of the automobile 901, but it may be installed at a rear portion of the automobile 901. In FIG. 9, a driving support system such as automatic braking and collision warning is operated based on a detection result (distance measurement result) of the detection apparatus 100. The driving support system includes various detection apparatuses such as a visible light sensor, a TOF distance measurement apparatus, and a millimeter wave radar. In the driving support system having the visible light sensor or the distance measurement apparatus using the parallax image and the distance measurement apparatus using the TOF method, in a case where the detection apparatus 100 is applied, there is no need to additionally mount a visible light sensor or the like, and the measurable distance can be improved. The detection apparatus 100 can also be applied to an autonomous driving vehicle.

### SECOND EMBODIMENT

This embodiment will describe an example that determines an area using image information obtained by an image sensor and the irradiation intensity of the light emitter.

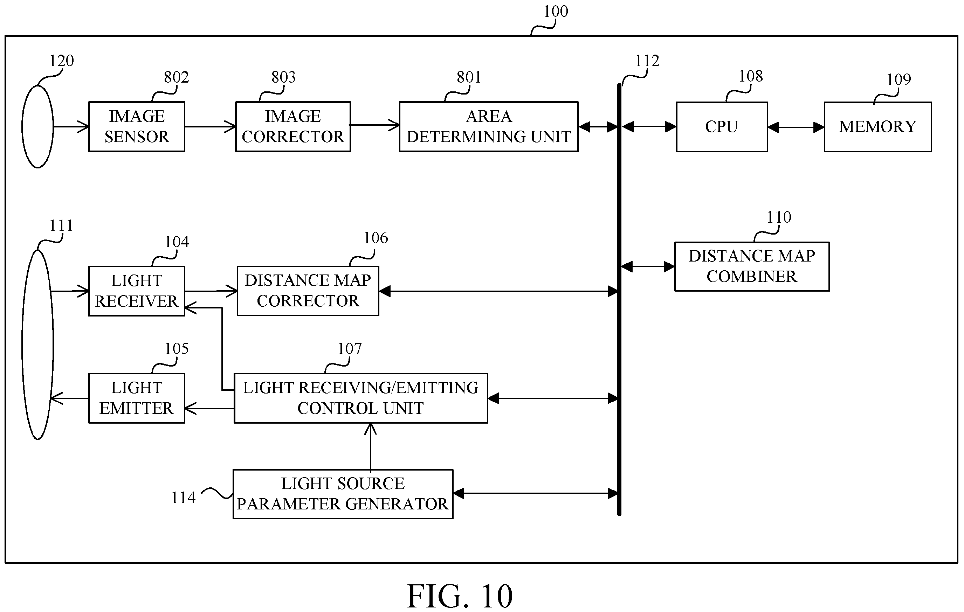

FIG. 10 is a block diagram illustrating the configuration of a detection apparatus (distance measurement apparatus) 100 according to this embodiment. Those elements in FIG. 10, which are corresponding elements in FIG. 1, will be designated by the same reference numerals, and a description thereof will be omitted.

An image sensor 802 outputs an image signal. Unlike the first embodiment, the image signal output by the image sensor 802 does not have to be a parallax image signal. The image signal obtained by the image sensor 802 is corrected by an image corrector 803 and is output to an area determining unit 801.

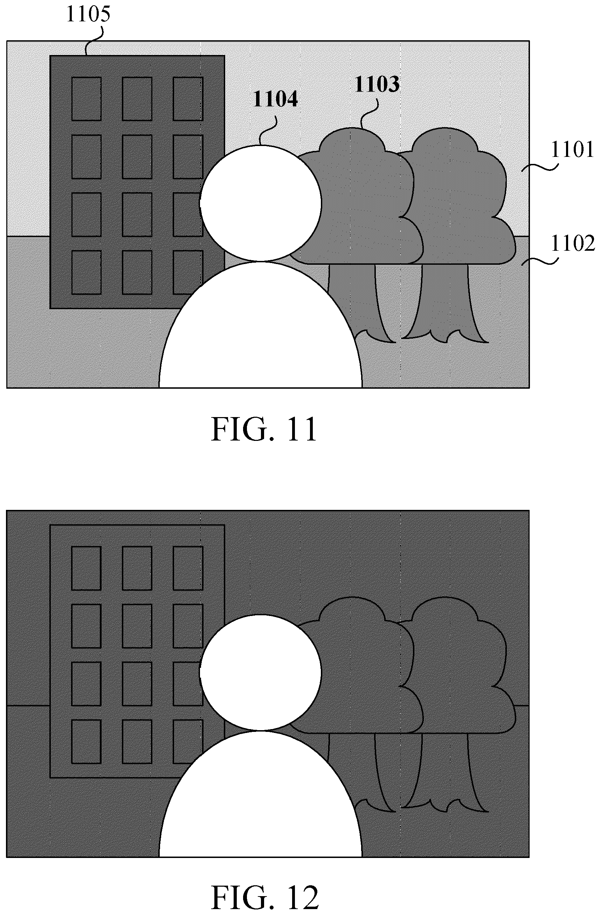

The area determining unit 801 determines an area using the image signal corrected by the image corrector 803. More specifically, the area determining unit 801 determines a target and performs a semantic segmentation for the image signal, divides the image signal into a plurality of areas, and labels each area. FIG. 11 is a conceptual view illustrating an example of an image in which the area determining unit 801 determines areas in the image signal illustrated in FIG. 6. FIG. 11 illustrates that the image signal illustrated in FIG. 6 is divided into areas by shading, and each area is labeled. For example, areas 1101, 1102, 1103, 1104, and 1105 are labeled as the sky, the ground, a tree, a human body, and a building, respectively.

The light source parameter generator 114 determines the irradiation intensity of the laser light for each of the plurality of irradiation areas of the light emitter 105 using the divided areas output of the area determining unit 801 and the label assigned to each area. The light source parameter generator 114 generates a light source parameter for the light emitter 105 to emit light with the determined irradiation intensity.

FIG. 12 is a conceptual view illustrating an example of the irradiation intensity of the laser light for each irradiation area. In FIG. 12, the irradiation intensity is set so that the irradiation intensity in an area determined by the area determining unit 801 to be a main object is high, and the irradiation intensity in other areas is low.

In the following description, in the diagram illustrating the irradiation intensity for each irradiation area, the lighter the shading is, the higher the irradiation intensity is, and the darker the shading is, the lower the irradiation intensity is. As the irradiation intensity of the laser light becomes higher, the reflected light intensity from the target that enters the light receiver 104 also becomes higher. Since the light receiver 104 also receives environmental light which becomes a noise, as the reflected light intensity from the target becomes higher, it becomes easier to detect the reflected light and the distance measuring accuracy becomes higher. Thus, by increasing the irradiation intensity of the laser light to a target area, such as the main object, for which the distance measurement is desired, the distance measuring accuracy for the target area can be improved. Although the human body is the target area in FIG. 12, the target area may be an animal, a car, an object, etc. according to an imaging scene. The irradiation intensity of the irradiation area corresponding to an area focused by the optical system 120 may be increased.

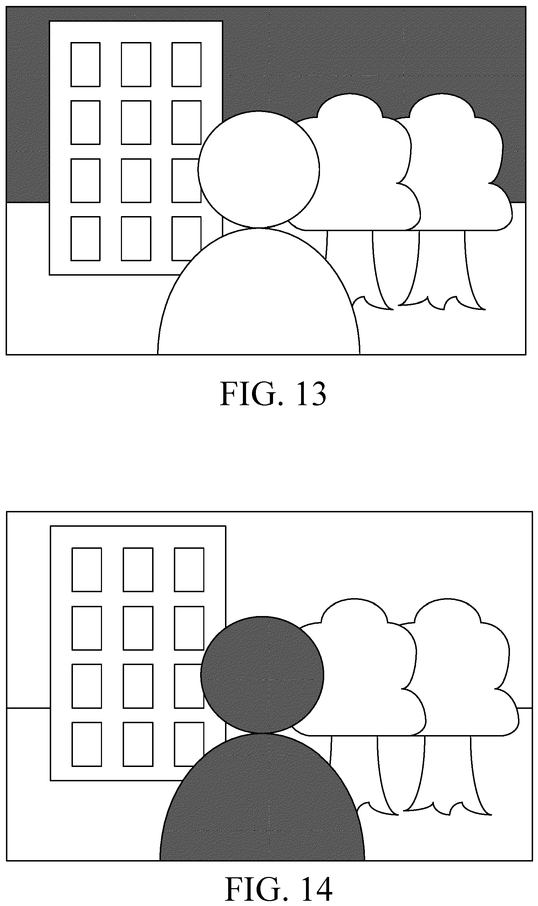

FIG. 13 is a conceptual view illustrating an example of the irradiation intensity of the laser light for each irradiation area. In FIG. 13, the irradiation intensity of an area determined to be the sky is set to be low. In the driving support system or the like, there is no need to measure the distance to the sky. It is sufficient to determine an area for which the distance measurement is not required (area not to be measured) according to the imaging scene, and by reducing the irradiation intensity for the area determined to be the area not to be measured, such as the sky, and increasing the irradiation intensity for other areas, the distance measuring accuracy and the measurable distance can be improved. In a case where there is no need to improve the distance measuring accuracy or the measurable distance, there is no need to increase the irradiation intensity for areas other than areas where the distance measurement is not required. In this case, the power consumption of the detection apparatus 100 can be reduced.

FIG. 14 is a conceptual view illustrating an example of the irradiation intensity of the laser light for each irradiation area. In FIG. 14, the irradiation intensity of an area determined to be a human body is set to be low. The laser light irradiated onto the human eye may cause the eye to get damaged depending on the intensity and wavelength of the laser light. Accordingly, reducing the irradiation intensity of the area determined to be the human body can reduce the influence of the laser light on the human body. In FIG. 11, the irradiation intensity of the human body area is set to be low, but the irradiation intensity may be set to be low for an area including the head and eyes instead of the entire area determined to be the human body. The irradiation intensity may be set to be low for objects that deteriorate when irradiated with laser light, such as works of art.

In a case where the human body area is moving, a delay occurs after the image signal is acquired by the image sensor 802 due to processing by the image corrector 803, the area determining unit 801, and the light source parameter generator 114. The light emitter 105 emits light at the light emission timing output at a predetermined timing by the light receiving/emitting control unit 107, but the timing at which the light source parameter is generated by the light source parameter generator 114 and the light emission timing are not necessarily synchronous. Therefore, a delay may occur between the generation of the light source parameter and the next light emission timing. If the human body is moving during the delay, it may not be possible to reduce the laser light in the area that is correctly determined to be the human body. As a moving amount of the human body becomes larger, the area of the human body which is irradiated with the laser light with a high irradiation intensity may be larger.

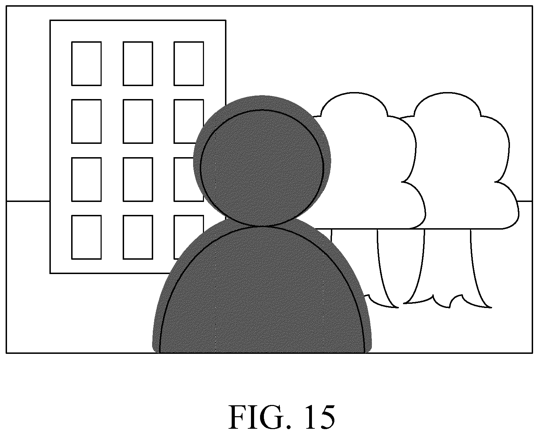

Accordingly, this embodiment writes the divided areas output from the area determining unit 801 into the memory 109 for the image information acquired by the image sensor 802 in the previous frame. In this frame, the moving amount of the area determined to be the human body can be calculated by reading the divided areas of the previous frame from the memory 109 and comparing them with the divided areas of this frame. In a case where the moving amount of the area determined to be the human body is larger than a predetermined amount, the irradiation intensity of the laser light in the area determined to be the human body and its surroundings is reduced, as illustrated in FIG. 15. In other words, this corresponds to increasing the size of (expanding) the area determined to be the human body, onto which the irradiation intensity of the laser light is to be reduced. In a case where the moving amount of the area determined to be the human body is smaller than the predetermined amount, the irradiation intensity of the laser light is reduced only in the area determined to be the human body, as illustrated in FIG. 11. In other words, this corresponds to maintaining the size of the area determined to be the human body, onto which the irradiation intensity of the laser light is to be reduced. The size of the area with low irradiation intensity around the human body may be changed depending on the moving amount. Estimating the moving amount of the area determined to be the human body using a plurality of frames can reduce the irradiation intensity of the laser light even for the moving human body.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that some embodiments are not limited to the disclosed embodiments. The scope of the following claims is to be accorded the broadest interpretation so as to encompass all such modifications and equivalent structures and functions.

Each embodiment can provide a detection apparatus that can improve a measurable distance while suppressing power consumption.

## Claims

1. A detection apparatus (100) comprising:
a first distance measuring unit that includes a light source configured to emit light having irradiation intensity changeable for each of a plurality of detection areas, the first distance measuring unit configured to emit the light to the detection area and to acquire first distance information to the detection area using reflected light from the detection area (104, 105);
a second distance measuring unit configured to acquire second distance information to the detection area using image information (102, 103); and
a determining unit configured to determine the irradiation intensity based on the second distance information.

2. The detection apparatus according to claim 1, **characterized in that** the plurality of detection areas include a first detection area and a second detection area located farther than the first detection area from the detection apparatus,
wherein the determining unit is configured to determine the irradiation intensity such that the irradiation intensity of the light emitted to the first detection area is lower than the irradiation intensity of the light emitted to the second detection area.

3. The detection apparatus according to claim 1 or 2, further comprising a combiner (110) configured to combine the first distance information and the second distance information,
**characterized in that** the combiner uses the second distance information as distance information to the detection area from which the first distance information has not been acquired.

4. The detection apparatus according to any one of claims 1 to 3, **characterized in that** the determining unit determines the irradiation intensity such that the irradiation intensity of the light emitted to a detection area from which the second distance information has been acquired is lower than the irradiation intensity of the light emitted to a detection area from which the second distance information has not been acquired.

5. The detection apparatus according to any one of claims 1 to 4, **characterized in that** the second distance measuring unit acquires the image information.

6. A detection apparatus (100) comprising:
a first distance measuring unit that includes a light source configured to emit light having irradiation intensity changeable for each of a plurality of detection areas, the first distance measuring unit configured to emit the light to the detection area and to acquire first distance information to the detection area using reflected light from the detection area (104, 105);
an imaging unit configured to acquire image information on the detection area (101, 802); and
an intensity determining unit (114) configured to determine the irradiation intensity based on the image information.

7. The detection apparatus according to claim 6, further comprising an area determining unit (801) is configured to determines a specific target using the image information,
**characterized in that** the intensity determining unit determines the irradiation intensity such that the irradiation intensity of the light emitted to a detection area that includes the specific target is lower than the irradiation intensity of the light emitted to a detection area that does not include the specific target.

8. The detection apparatus according to claim 7, **characterized in that** the intensity determining unit expands the detection area that includes the specific target in a case where a moving amount of the specific target estimated with the image information regarding a plurality of frames is larger than a predetermined amount, and the intensity determining unit maintain the detection area that includes the specific target in a case where the moving amount is smaller than the predetermined amount.

9. The detection apparatus according to claim 7 or 8, **characterized in that** the specific target includes a human body.

10. The detection apparatus according to claim 7 or 8, **characterized in that** the specific target includes a head.

11. The detection apparatus according to claim 7 or 8, **characterized in that** the specific target includes an eye.

12. The detection apparatus according to any one of claims 6 to 11, further comprising the area determining unit (801) configured to determine a main object using the image information,
**characterized in that** the intensity determining unit determines the irradiation intensity such that the irradiation intensity of the light emitted to a detection area that includes the main object is higher than the irradiation intensity of the light emitted to a detection area that does not include the main object.

13. The detection apparatus according to any one of claims 6 to 12, further comprising the area determining unit (801) configured to determine an area not to be measured, for which a distance measurement is not required using the image information,
**characterized in that** the intensity determining unit determines the irradiation intensity such that the irradiation intensity of the light emitted to a detection area that includes the area not to be measured is lower than the irradiation intensity of the light emitted to a detection area that does not include the area not to be measured.

14. The detection apparatus according to claim 13, **characterized in that** the area not to be measured is an area determined to be a sky.

15. The detection apparatus according to any one of claims 7 to 13, **characterized in that** the intensity determining unit is configured to perform a semantic segmentation for the image information.
